# EUROPÄISCHE PATENTSCHRIFT

(11) **EP 1 502 018 B1**
(45) Veröffentlichungstag und Bekanntmachung des Hinweises auf die Patenterteilung: **23.07.2008**
(21) Anmeldenummer: 03749860.7
(22) Anmeldetag: 26.04.2003
(51) Int. Cl.: F02D 41/22, F02D 35/02, F02D 41/14

(54) **VERFAHREN ZUM BETREIBEN EINES VERBRENNUNGSMOTORS**
METHOD FOR OPERATING AN INTERNAL COMBUSTION ENGINE
PROCEDE DE FONCTIONNEMENT D'UN MOTEUR A COMBUSTION INTERNE

(30) Priorität: 07.05.2002 DE 10220320
(43) Veröffentlichungstag der Anmeldung: 02.02.2005
(73) Patentinhaber: Daimler AG, 70327 Stuttgart (DE)
(72) Erfinder: BETSCH, Jochen, 71334 Waiblingen (DE); ENGEL, Ulrich, 73207 Plochingen (DE)
(86) Internationale Anmeldenummer: PCT/EP2003/004381
(87) Internationale Veröffentlichungsnummer: WO 2003/095820

(56) Entgegenhaltungen:
- DE-A- 10 020 448
- DE-A- 10 043 383
- DE-C- 3 933 947

## Beschreibung

Die Erfindung betrifft ein Verfahren zum Betreiben eines Verbrennungsmotors, insbesondere eines Dieselmotors, mit den Schritten des Erfassens von Betriebsgrößen des Verbrennungsmotors sowie des Einstellens von Betriebsparametern des Verbrennungsmotors in Abhängigkeit der erfassten Betriebsgrößen.

Aus der deutschen Offenlegungsschrift DE 29 39 590 A1 ist ein Verfahren zum Betreiben eines Verbrennungsmotors bekannt, bei dem ein Brennraumdruck nach Größe und Kurbelwellenwinkellage erfasst wird. Der erfasste Verlauf des Brennraumdrucks wird differenziert und Nulldurchgänge der Ableitung werden festgestellt. Am ersten Nulldurchgang wird das Auftreten des Spitzendrucks angenommen und der zugehörige Kurbelwellenwinkel wird festgestellt. In Abhängigkeit der Kurbelwellenwinkellage des Spitzendrucks werden Betriebsparameter des Verbrennungsmotors geregelt.

Nach der DE 39 33 947 C wird ein Spitzendruck im Brennraum einer Brennkraftmaschine anhand von Kurbelwellen - Signalen abgeleitet, durch Messung der Beschleunigung. Diese Signale werden zur Regelung von Betriebsparametern (Kraftstoffmenge , Zündung) benutzt.

Bauteile von Verbrennungsmotoren unterliegen bezüglich ihrer Abmessungen statistischen Streuungen. Daher gibt es obere und untere Grenzmustermotoren, die die Eckpunkte einer zugelassenen Streubreite von limitierenden Betriebsgrößen bilden. Beim Dieselmotor ist speziell die Streubreite des Brennraumspitzendrucks eine limitierende Größe, da bei Überschreitung des oberen, zugelassenen Grenzwerts des Spitzendrucks die Belastbarkeitsgrenze des Dieselmotors überschritten wird. Bei einem zugelassenen Brennraumspitzendruck von 200bar mit einer Streubreite von 20bar kann die Konstruktion des Dieselmotors lediglich auf 180bar Sollwert ausgelegt werden, um auch bei einem oberen Grenzmustermotor die Belastbarkeitsgrenze nicht zu überschreiten.

Der Erfindung liegt die Aufgabe zugrunde, während des Betriebs des Verbrennungsmotors zu erkennen, ob der Brennraumspitzendruck noch innerhalb der zugelassenen Streubreite liegt.

Erfindungsgemäß ist hierzu ein Verfahren zum Betreiben eines Verbrennungsmotors, insbesondere eines Dieselmotors, mit den Schritten gemäß Anspruch 1 vorgesehen.

Damit kann während des Betriebs des Verbrennungsmotors, beispielsweise im Motorsteuergerät selbst, festgestellt werden, ob der Verbrennungsmotor die Belastbarkeitsgrenze überschreitet oder umgekehrt einen zu niedrigen Brennraumspitzendruck und damit ein geringeres Leistungsvermögen hat. Dadurch ist es auf einfache Weise, beispielsweise durch einen Probelauf nach Fertigstellung des Verbrennungsmotors, möglich, den Verbrennungsmotor ohne aufwendige, externe Messgeräte zu überprüfen und gegebenenfalls durch geeignete Maßnahmen auf einen Sollwert des Brennraumspitzendrucks einzustellen. Auch während der gesamten Motorlebensdauer kann eine Veränderung, die Auswirkung auf den Brennraumspitzendruck hat, erkannt werden. Dabei muss der Brennraumspitzendruck nicht unmittelbar erfasst werden, vielmehr kann bei bestimmten Wertekombinationen von Betriebsgrößen wie Kurbelwellengeschwindigkeit, Lambda-Wert, Abgastemperatur, auf eine Erhöhung des Brennraumspitzendrucks geschlossen werden.

In Weiterbildung des erfindungsgemäßen Verfahrens erfolgt das Einstellen der Betriebsparameter des Verbrennungsmotors im Hinblick auf eine Angleichung des Brennraumspitzendrucks an den vorbestimmten Maximalwert.

Indem eine Steuerung oder Regelung den Brennraumspitzendruck als zu regelnde Größe hat, können Einflüsse von Bauteiltoleranzen auf den Brennraumspitzendruck ausgeglichen werden. Damit ist eine Auslegung der Bauteilsollabmessungen auf den maximal zulässigen Spitzendruck möglich, da eine Überschreitung des maximal zulässigen Spitzendrucks bzw. ein Unterschreiten einer Untergrenze korrigiert werden kann. Infolgedessen müssen weniger Motoren als fehlerhaft eingestuft werden und insgesamt weisen Verbrennungsmotoren eines Baumusters ein gleichmäßigeres Leistungsspektrum auf.

Es wird eine Winkelgeschwindigkeit einer Kurbelwelle des Verbrennungsmotors als Betriebsgröße erfasst, wobei beim Detektieren einer Verzögerung der Kurbelwelle in Verdichtungstakt gegenüber einem Normalbetrieb eine erhöhte Wahrscheinlichkeit für das Überschreiten des vorbestimmten Maximalwerts durch den Brennraumspitzendruck angenommen wird.

Auf diese Weise kann ohne den Brennraumdruck selbst mittels eines Sensors erfassen zu müssen, eine diesbezügliche Aussage getroffen werden. Drucksensoren im Brennraum sind sowohl kostenintensiv als auch problematisch bezüglich der Langzeitstabilität. Der Kurbelwellenwinkel wird beispielsweise in einem Bereich zwischen 80° und 30° Kurbelwellenwinkel vor dem oberen Zündtotpunkt überwacht.

In Weiterbildung der Erfindung werden während des Verdichtungstaktes eines ersten Zylinders zweite Zylinder, deren Arbeitsphasen dem Verdichtungstakt des ersten Zylinders überlagert sind, abgeschaltet.

Auf diese Weise ist eine Verzögerung der Kurbelwelle im Verdichtungstakt des ersten Zylinders gut zu detektieren, wobei dies insbesondere bei Motoren mit mehr als vier Zylindern von Bedeutung ist. Zum Abschalten der Zylinder kann beispielsweise eine Einspritzung in diese Zylinder abgeschaltet werden. Aus Komfortgründen kann vorgesehen sein, diese Zylinderabschaltung nur im Rahmen einer Motorüberprüfung im Werk oder in der Werkstatt vorzunehmen. Eine Überprüfung des Brennraumspitzendrucks mit einer anschließenden Einstellung der Betriebsparameter im Hinblick auf eine Angleichung des Brennraumspitzendrucks an den vorbestimmten Maximalwert kann beispielsweise auch erfolgen, um Bauteilverschleiß auszugleichen und die Leistungsfähigkeit des Verbrennungsmotors über die gesamte Betriebsdauer annähernd konstant zu halten.

Es wird eine Winkelgeschwindigkeit einer Kurbelwelle des Verbrennungsmotors als Betriebsgröße erfasst, wobei beim Detektieren einer Beschleunigung der Kurbelwelle im Verbrennungstakt gegenüber Normalbetrieb eine erhöhte Wahrscheinlichkeit für das Überschreiten des vorbestimmten Maximalwerts durch den Brennraumspitzendruck angenommen wird.

Auf diese Weise ist auch ohne Erfassung des Brennraumdrucks selbst eine Aussage über diesen möglich. Beispielsweise wird die Winkelgeschwindigkeit der Kurbelwelle in einem Bereich zwischen 30° und 100° Kurbelwellenwinkel nach dem oberen Zündtotpunkt überprüft. Tritt eine Beschleunigung der Kurbelwelle nach dem oberen Totpunkt gegenüber dem Normalbetrieb auf, ist beispielsweise eine Einspritzmenge zu groß oder ein Ansteuerbeginn ist zu früh erfolgt, wodurch ein erhöhter Brennraumspitzendruck verursacht werden kann.

In Weiterbildung der Erfindung wird eine Abgastemperatur als Betriebsgröße erfasst, wobei beim Detektieren einer verringerten Abgastemperatur gegenüber Normalbetrieb eine erhöhte Wahrscheinlichkeit für das Überschreiten des vorbestimmten Maximalwerts durch den Brennraumspitzendruck angenommen wird.

Generell deutet eine verringerte Abgastemperatur auf die Gefahr des Überschreitens des zulässigen Brennraumspitzendrucks hin. Mittels Erfassung der Abgastemperatur kann damit beispielsweise eine über die Auswertung einer Beschleunigung bzw. Verzögerung der Kurbelwelle getroffene Aussage bezüglich des Brennraumspitzendrucks verfeinert werden.

In Weiterbildung der Erfindung wird ein Lambda-Wert des Abgases als Betriebsgröße erfasst, wobei beim Detektieren eines erhöhten Lambda-Werts gegenüber Normalbetrieb eine erhöhte Wahrscheinlichkeit für das Überschreiten des vorbestimmten Maximalwerts durch den Brennraumspitzendruck angenommen wird.

Die Erfassung und Auswertung eines Lambda-Werts ermöglicht es, die Sicherheit einer Aussage über den Brennraumspitzendruck weiter zu erhöhen, ohne dass dieser selbst erfasst werden müsste. Besonders vorteilhaft ist dabei, dass mittels Auswertung von Betriebsgrößen, die bei modernen Verbrennungsmotoren ohnehin erfasst werden, eine Aussage über den Brennraumspitzendruck möglich ist.

In Weiterbildung der Erfindung wird eine Stegtemperatur im Brennraum als Betriebsgröße erfasst, wobei beim Detektieren einer erhöhten Stegtemperatur gegenüber Normalbetrieb eine erhöhte Wahrscheinlichkeit für das Überschreiten des vorbestimmten Maximalwerts durch den Brennraumspitzendruck angenommen wird.

Auch das Erfassen einer Stegtemperatur im Brennraum ermöglicht eine Aussage über den Brennraumspitzendruck. Wenn die Stegtemperatur zu hoch ist, steigt die Wahrscheinlichkeit, dass der Ansteuerbeginn zu früh erfolgt oder die Einspritzmenge zu groß ist, was wiederum zu einem erhöhten Brennraumspitzendruck führen kann.

In Weiterbildung der Erfindung werden eine Abgastemperatur, ein Lambda-Wert des Abgases und eine Winkelgeschwindigkeit einer Kurbelwelle des Verbrennungsmotors und insbesondere eine Stegtemperatur im Brennraum als Betriebsgrößen erfasst, wobei beim Auftreten vorbestimmter Kombinationen von Werten dieser Betriebsgrößen eine erhöhte Wahrscheinlichkeit für das Über-
oder Unterschreiten des vorbestimmten Maximalwerts durch den Brennraumspitzendruck angenommen wird.

In Weiterbildung der Erfindung wird eine Abgastemperatur, ein Lambda-Wert des Abgases und eine Winkelgeschwindigkeit einer Kurbelwelle des Verbrennungsmotors als Betriebsgrößen erfasst, wobei beim Detektieren einer erhöhten Abgastemperatur und eines verringerten Lambda-Werts gegenüber Normalbetrieb in Verbindung mit einer Beschleunigung der Kurbelwelle im Verbrennungstakt gegenüber Normalbetrieb eine erhöhte Wahrscheinlichkeit für das Überschreiten des vorbestimmten Maximalwerts durch den Brennraumspitzendruck angenommen wird.

Mittels dieser Verfahrensschritte wird ein Sonderfall erfasst, bei dem die Abgastemperatur sowie der Lambda-Wert an und für sich keine Überschreitung des Maximalwerts durch den Brennraumspitzendruck andeuten, in Verbindung mit einer zu großen Einspritzmenge aber eine solche Überschreitung eintreten kann. Infolgedessen wird mittels der Prüfung, ob die Kurbelwelle im Verbrennungstakt gegenüber Normalbetrieb beschleunigt wird, abgeprüft, ob eine zu große Einspritzmenge vorliegt. Nur in diesem Fall wird dann eine erhöhte Wahrscheinlichkeit für einen erhöhten Brennraumspitzendruck angenommen.

In Weiterbildung der Erfindung werden eine Abgastemperatur, ein Lambda-Wert des Abgases und eine Winkelgeschwindigkeit einer Kurbelwelle des Verbrennungsmotors als Betriebsgrößen erfasst, wobei beim Detektieren einer verringerten Abgastemperatur und eines erhöhten Lambda-Werts gegenüber Normalbetrieb in Verbindung mit einer Verzögerung der Kurbelwelle im Verbrennungstakt gegenüber Normalbetrieb keine erhöhte Wahrscheinlichkeit für das Überschreiten des vorbestimmten Maximalwerts durch den Brennraumspitzendruck angenommen wird.

Durch diese Verfahrensschritte wird ein weiterer Sonderfall abgedeckt, bei dem die Abgastemperatur sowie der Lambda-Wert an und für sich auf eine erhöhte Wahrscheinlichkeit für einen erhöhten Brennraumspitzendruck hindeuten. In Verbindung mit einer zu kleinen Einspritzmenge gegenüber Normalbetrieb sind diese Werte aber nicht kritisch. Die Überprüfung der Einspritzmenge wird mittels einer Erfassung des Kurbelwellenwinkels im Verbrennungstakt durchgeführt. Bei einer Verzögerung der Kurbelwellen im Verbrennungstakt gegenüber Normalbetrieb kann auf eine zu kleine Einspitzmenge geschlossen werden. Nur in diesem Fall wird dann keine erhöhte Wahrscheinlichkeit für einen erhöhten Brennraumspitzendruck angenommen und die Bewertung verschiebt sich in den unkritischen Bereich.

Weitere Vorteile der Erfindung ergeben sich aus den Ansprüchen sowie der nachfolgenden Beschreibung einer bevorzugten Ausführungsform der Erfindung im Zusammenhang mit den Zeichnungen. In den Zeichnungen zeigen:
- Fig. 1: eine diagrammartige Darstellung der erfindungsgemäßen Verfahrensschritte,
- Fig. 2a: eine diagrammartige Darstellung einzelner Verfahrensschritte bei der bevorzugten Ausführungsform des erfindungsgemäßen Verfahrens und
- Fig. 2b: eine weitere diagrammartige Darstellung einzelner Verfahrensschritte bei der bevorzugten Ausführungsform des erfindungsgemäßen Verfahrens.

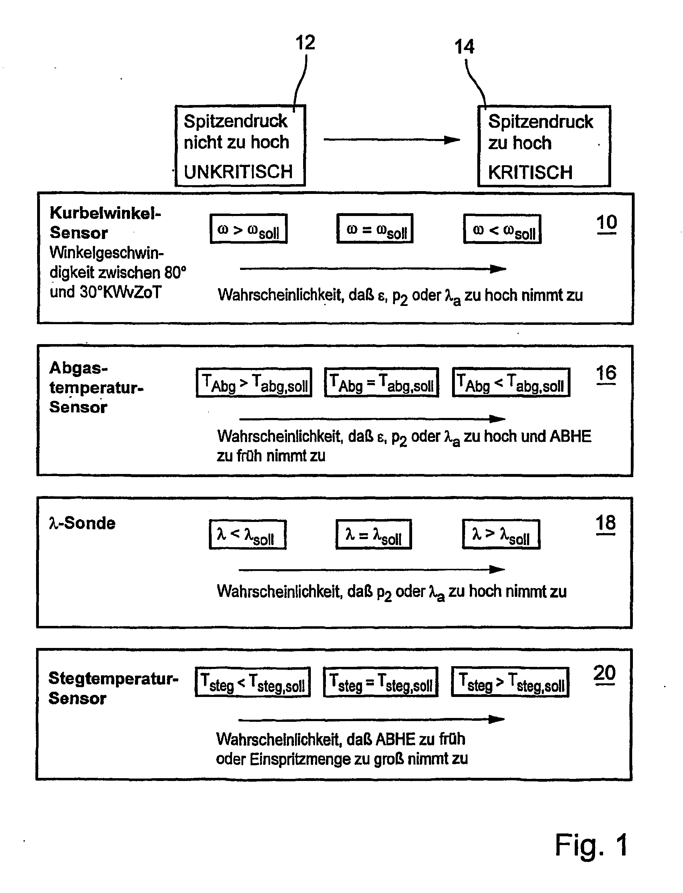

Die diagrammartige Darstellung der Fig. 1 verdeutlicht die Vorgehensweise bei dem erfindungsgemäßen Verfahren. In Abhängigkeit der Werte der einzelnen erfassten Betriebsgrößen, nämlich der Kurbelwellenwinkelgeschwindigkeit ω, der Abgastemperatur T_{Abg}, dem Lambda-Wert λ des Abgases sowie der Brennraumstegtemperatur T_{steg}, verändern sich die Wahrscheinlichkeiten dafür, dass Betriebsparameter Werte annehmen, die zu einem erhöhten Brennraumspitzendruck führen können.

Im einzelnen bedeuten die verwendeten Abkürzungen und Formelzeichen folgendes:
ω - Winkelgeschwindigkeit der Kurbelwelle
T_{Abg} - Abgastemperatur
λ - Luftverhältnis
T_{steg} - Stegtemperatur
ε - Verdichtungsverhältnis
p₂ - Ladedruck
λₐ - Luftaufwand (Maß für die Zylinderfüllung)
ABHE - Ansteuerbeginn (Maß für den Einspritzbeginn)
°KWvZOT - Grad Kurbelwellenwinkel vor oberem Zündtotpunkt
°KWnZOT - Grad Kurbelwellenwinkel nach oberen Zündtotpunkt.

Im einzelnen ist im Block 10 der Fig. 1 angedeutet, dass eine Winkelgeschwindigkeit ω einer Kurbelwelle eines Verbrennungsmotors mittels eines Kurbelwinkelsensors erfasst wird und die erfasste Kurbelwellenwinkelgeschwindigkeit ω im Verdichtungstakt, speziell zwischen 80° und 30° KWvZOT, durch Vergleich mit den Werten ωₛₒₗₗ für den Normalbetrieb ausgewertet wird. Weiter ist dem Block 10 zu entnehmen, dass dann, wenn die erfasste Kurbelwellenwinkelgeschwindigkeit ω in dem angegebenen Winkelbereich einen Sollwert ωₛₒₗₗ unterschreitet, die Wahrscheinlichkeit zunimmt, dass das Verdichtungsverhältnis ε, ein Ladedruck p₂ oder ein Luftaufwand λₐ zu hoch sind. Ein zu hohes Verdichtungsverhältnis ε, ein zu hoher Ladedruck p₂ oder ein zu hoher Luftaufwand λₐ, der eine zu große Zylinderfüllung mit sich bringt, verschieben eine Bewertung des Brennraumspitzendrucks in den kritischen Bereich. So kann bei einer Verzögerung der Kurbelwelle im Verdichtungstakt, entsprechend ω < ωₛₒₗₗ, eine erhöhte Wahrscheinlichkeit für das Überschreiten des vorbestimmten Maximalwerts durch den Brennraumspitzendruck angenommen werden.

Eine unkritische Bewertung des Brennraumspitzendrucks ist in der Fig. 1 mittels des Blocks 12 angedeutet, eine kritische Bewertung des Brennraumspitzendrucks ist mittels des Blocks 14 angedeutet.

Mittels eines Blocks 16 ist die Erfassung einer Abgastemperatur T_{Abg} mittels eines Abgastemperatursensors sowie die Auswertung der erfassten Abgastemperatur T_{Abg} durch Vergleich mit Sollwerten T_{Abg,soll} verdeutlicht. So nimmt dann, wenn eine erfasste Abgastemperatur T_{Abg} einen Sollwert der Abgastemperatur im Normalbetrieb T_{abg,soll} unterschreitet, die Wahrscheinlichkeit dafür zu, dass das Verdichtungsverhältnis ε, der Ladedruck p₂ oder der Luftaufwand λₐ zu hoch sind. Gleichzeitig nimmt die Wahrscheinlichkeit dafür zu, dass ein Ansteuerbeginn ABHE, der ein Maß für den Einspritzbeginn darstellt, zu früh erfolgt ist. In diesem Fall verschiebt sich die Bewertung des Spitzendrucks vom Block 12 zu der kritischen Bewertung des Blocks 14.

Mittels des Blocks 18 wird verdeutlicht, dass ein Lambda-Wert λ des Abgases mit einer Lambda-Sonde erfasst und durch Vergleich mit Lambda-Werten für den Normalbetrieb λₛₒₗₗ ausgewertet wird. Block 18 ist zu entnehmen, dass dann, wenn der Lambda-Wert λ des Abgases einen Sollwert λₛₒₗₗ für den Normalbetrieb überschreitet, die Wahrscheinlichkeit dafür zunimmt, dass der Ladedruck p₂ oder der Luftaufwand λₐ zu hoch sind. Mit einer Überschreitung des Sollwerts λₛₒₗₗ verschiebt sich die Bewertung des Brennraumspitzendrucks vom Block 12 zum Block 14, d.h., es wird eine erhöhte Wahrscheinlichkeit für das Überschreiten des vorbestimmten Maximalwertes durch den Brennraumspitzendruck angenommen.

Schließlich ist in der Fig. 1 ein Block 20 dargestellt, der die Erfassung einer Stegtemperatur T_{steg} im Brennraum mittels eines Stegtemperatursensors andeutet sowie die Auswertung der erfassten Stegtemperatur T_{steg} durch Vergleich mit Werten T_{steg,soll} für Normalbetrieb verdeutlicht. Die in den Blöcken 10, 16, 18 und 20 verwendeten Sollwerte können beispielsweise in einem Kennfeld eines Motorsteuergeräts abgelegt sein. Gemäß Block 20 steigt dann, wenn die Stegtemperatur T_{steg} einen Sollwert der Stegtemperatur T_{steg},ₛₒₗₗ überschreitet, die Wahrscheinlichkeit dafür, dass ein Ansteuerbeginn ABHE zu früh erfolgt und/oder die Einspritzmenge zu groß ist. Gleichzeitig mit einer Überschreitung des Sollwerts T_{steg,soll} der Stegtemperatur T_{steg} verschiebt sich eine Bewertung des Spitzendrucks von der unkritischen Bewertung im Block 12 zur kritischen Bewertung des Blocks 14.

Durch das erfindungsgemäße Verfahren kann eine Aussage über den Brennraumspitzendruck getroffen werden, ohne dass dieser selbst erfasst werden muss. Dabei ist festzustellen, dass im Rahmen des erfindungsgemäßen Verfahrens der Kurbelwellenwinkelsensor im Block 10 grundsätzlich auch als einziger Sensor eingesetzt werden könnte, da eine Auswertung der Winkelgeschwindigkeit ω im Verdichtungstakt bzw. im Verbrennungstakt bereits für sich gesehen eine, wenn auch grobe und möglicherweise unzuverlässige Aussage über den Brennraumspitzendruck erlaubt. Erst durch geschickte Kombination mit dem Abgastemperatursensor im Block 16, der Lambda-Sonde im Block 18 sowie dem Stegtemperatursensor im Block 20 läßt sich eine zuverlässige Erkennung aller spitzendruckerhöhenden Einflussgrößen realisieren. Bei der bevorzugten Ausführungsform der Erfindung werden alle vier Sensoren kombiniert, um eine verlässliche Aussage zu erhalten.

Wird mittels einer Auswertung der genannten Sensorsignale im Motorsteuergerät ein erhöhter Brennraumspitzendruck erkannt, werden mittels des Motorsteuergeräts Maßnahmen eingeleitet, die zu einer Verringerung des Brennraumspitzendrucks führen.

Solche Maßnahmen sind beispielsweise eine Verringerung der Einspritzmenge oder des Ladedrucks bzw. eine Korrektur des Ansteuerbeginns.

Die Darstellung der Fig. 1 verdeutlicht lediglich die prinzipiellen Abhängigkeiten des Brennraumspitzendrucks von der Winkelgeschwindigkeit ω, der Abgastemperatur T_{Abg}, dem Lambda-Wert λ und der Stegtemperatur T_{steg}. Beim Betrieb eines Verbrennungsmotors treten jedoch Sonderfälle auf, die durch die Darstellung der Fig. 1 nicht erfasst sind.

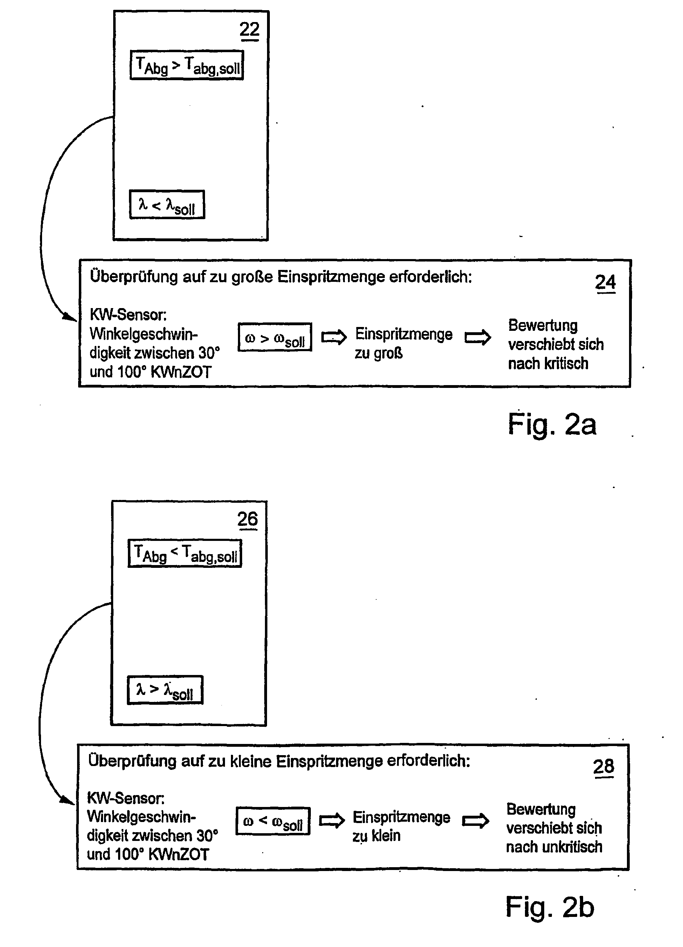

Zwei Sonderfälle sind in der diagrammartigen Darstellung der Fig. 2a bzw. 2b verdeutlicht.

Im Block 22 der Fig. 2a ist der Fall dargestellt, in dem die Abgastemperatur T_{Abg} größer ist als der Sollwert T_{abg,soll} und gleichzeitig der Lambda-Wert λ kleiner ist als der Sollwert λₛₒₗₗ. Diese Wertekombination würde gemäß der Darstellung der Fig. 1 an und für sich dazu führen, dass der Brennraumspitzendruck gemäß Block 12, d.h. unkritisch, bewertet wird. Tatsächlich ist in diesem Fall aber eine Überprüfung dahingehend erforderlich, ob eine zu große Einspritzmenge vorliegt. Diese Überprüfung ist mittels des Blocks 24 dargestellt. Die Überprüfung der Einspritzmenge erfolgt durch Auswertung der Winkelgeschwindigkeit ω der Kurbelwelle in einem Bereich zwischen 30° und 100° Kurbelwellenwinkel nach oberem Zündtotpunkt. Liegt in diesem Bereich die Winkelgeschwindigkeit ω über einem Sollwert ωₛₒₗₗ, kann daraus geschlossen werden, dass eine Einspritzmenge zu groß ist, wodurch sich die Bewertung des Spitzendrucks in dem kritischen Bereich verschiebt. Infolgedessen führt erst die geschickte Kombination verschiedener Werte von Betriebsgrößen zu einer verlässlichen Aussage über den Brennraumspitzendruck. In dem erläuterten Sonderfall, wenn gegenüber Normalbetrieb eine erhöhte Abgastemperatur T_{Abg} und ein verringerter Lambda-Wert λ detektiert werden, wird folglich nur dann eine erhöhte Wahrscheinlichkeit für das Überschreiten des vorbestimmten Maximalwerts durch den Brennraumspitzendruck angenommen, wenn gleichzeitig eine Beschleunigung der Kurbelwelle im Verbrennungstakt gegenüber Normalbetrieb vorliegt.

Ein weiterer Sonderfall ist in der diagrammartigen Darstellung der Fig. 2b verdeutlicht. Durch einen Block 26 ist der Fall angedeutet, in dem die Abgastemperatur T_{Abg} kleiner ist als ein Sollwert T_{abg,soll} und gleichzeitig der Lambda-Wert λ größer ist als der Sollwert λₛₒₗₗ. Diese Wertekombination gemäß Block 26 würde in der Darstellung der Fig. 1 an und für sich zu einer Bewertung des Spitzendrucks gemäß Block 14, d.h. einer kritischen Bewertung, führen. Tatsächlich ist im Fall des Blocks 26 aber eine Überprüfung erforderlich, ob eine zu kleine Einspritzmenge vorliegt. Diese Überprüfung ist durch den Block 28 verdeutlicht und erfolgt durch eine Überprüfung der Winkelgeschwindigkeit ω der Kurbelwelle im Verbrennungstakt. Block 28 verdeutlicht, dass mittels eines Kurbelwellenwinkelsensors die Winkelgeschwindigkeit ω der Kurbelwelle in einem Bereich zwischen 30° und 100° Kurbelwellenwinkel nach oberen Zündtotpunkt erfasst und ausgewertet wird. Liegt in diesem Bereich die Winkelgeschwindigkeit ω unter dem Sollwert ωₛₒₗₗ kann daraus geschlossen werden, dass die Einspritzmenge gegenüber Normalbetrieb zu klein ist. Hierdurch verschiebt sich die aufgrund des Blocks 26 angenommene kritische Bewertung des Brennraumspitzendrucks in den unkritischen Bereich.

Bei der Erfindung liegt die Erkenntnis zugrunde, dass verschiedene Betriebsgrößen eines Verbrennungsmotors zu einem erhöhten Brennraumspitzendruck führen können. Soll eine Aussage über den Brennraumspitzendruck ohne unmittelbare Erfassung des Brennraumspitzendrucks, die einen Drucksensor im Brennraum erfordern würde, gemacht werden, kann durch geschickte Kombination der Auswertung anderer Sensorsignale ebenfalls eine Aussage getroffen werden. Im einzelnen kann ein zu hohes Verdichtungsverhältnis ε, beispielsweise verursacht durch Bauteiltoleranzen, zu einem erhöhten Brennraumspitzendruck führen. Ein zu hoher Ladedruck p₂, beispielsweise verursacht durch einen fehlerhaften Ladedrucksensor, kann ebenfalls zu einem erhöhten Brennraumspitzendruck führen. Weiterhin kann ein erhöhter Brennraumspitzendruck durch einen zu frühen Einspritzbeginn verursacht werden, wobei Ursache für einen zu frühen'Einspritzbeginn beispielweise ein Fehler des Kurbelwellenwinkelsensors sein kann. Ein Maß für den Einspritzbeginn stellt der Ansteuerbeginn ABHE dar. Weitere Gründe für einen zu hohen Brennraumspitzendruck können in einer zu hohen Einspritzmenge liegen, die beispielsweise durch eine Toleranz des CR-Injektors oder des Raildruck-Sensors verursacht sein kann. Eine Injektor-Toleranz kann auch zu einer erhöhten Vor-Einspritzmenge und somit zu einer Erhöhung des Brennraumspitzendrucks führen. Ebenfalls denkbar, wenn auch von untergeordneter Bedeutung, ist eine zu große Zylinderfüllung, repräsentiert durch einen zu hohen Luftaufwand λₐ, beispielsweise durch nach spät verstellte Steuerzeiten. Auch ein zu hoher Luftaufwand λₐ kann zu einem erhöhten Brennraumspitzendruck führen.

Mittels des erfindungsgemäßen Verfahrens können für eine Aussage über den Brennraumspitzendruck Signale von Sensoren verwendet werden, die bei einem modernen Dieselmotor ohnehin vorgesehen sind. So ist ein Kurbelwellenwinkelsensor grundsätzlich vorhanden, ein Abgastemperatursensor sowie eine Lambda-Sonde sind bei Verwendung eines NOₓ-Speicherkats gefordert und ein Stegtemperatursensor ist für die Verwirklichung eines optimalen Wärmemanagement des Dieselmotors gefordert. Auf diese Weise kann auf einen zusätzlichen Drucksensor im Brennraum verzichtet werden, der zwar die optimale, unmittelbare Messgröße liefern würde, jedoch kostenintensiv und möglicherweise nicht langzeitstabil ist.

## Patentansprüche

1. Verfahren zum Betreiben eines Verbrennungsmotors, insbesondere eines Dieselmotors, mit den Schritten des Erfassens von Betriebsgrößen des Verbrennungsmotors sowie des Einstellens von Betriebsparametern des Verbrennungsmotors in Abhängigkeit der erfassten Betriebsgrößen und dem Schritt des Prüfens, ob die Werte der erfassten Betriebsgrößen und/oder Kombinationen dieser Werte auf eine Abweichung eines Brennraumspitzendrucks von einem vorbestimmten Maximalwert hinweisen,
**gekennzeichnet durch**
das Erfassen einer Winkelgeschwindigkeit (ω) einer Kurbelwelle des Verbrennungsmotors als Betriebsgröße, wobei beim Detektieren einer Verzögerung der Kurbelwelle im Verdichtungstakt gegenüber einem Normalbetrieb eine erhöhte Wahrscheinlichkeit für das Überschreiten des vorbestimmten Maximalwerts **durch** den Brennraumspitzendruck angenommen wird und/oder beim Detektieren einer Beschleunigung der Kurbelwelle im Verbrennungstakt gegenüber einem Normalbetrieb eine erhöhte Wahrscheinlichkeit für das Überschreiten des vorbestimmten Maximalwerts **durch** den Srennraumspitzendruck angenommen wird.

2. Verfahren nach Anspruch 1,
**dadurch gekennzeichnet, dass**
das Einstellen der Betriebsparameter des Verbrennungsmotors im Hinblick auf eine Angleichung des Brennraumspitzendrucks an den vorbestimmten Maximalwert erfolgt.

3. Verfahren nach Anspruch 1 oder 2,
**dadurch gekennzeichnet, dass**
während des Verdichtungstaktes eines ersten Zylinders zweite Zylinder, deren Arbeitsphasen dem Verdichtungstakt des ersten Zylinders überlagert sind, abgeschaltet werden.

4. Verfahren nach Anspruch 1 oder 2,
**gekennzeichnet durch**
das zusätzliche Erfassen einer Abgastemperatur (T_{Abg}) als Betriebsgröße, wobei beim Detektieren einer verringerten Abgastemperatur gegenüber dem Normalbetrieb eine erhöhte Wahrscheinlichkeit für das Überschreiten des vorbestimmten Maximalwerts **durch** den Brennraumspitzendruck angenommen wird.

5. Verfahren nach einem der vorstehenden Ansprüche,
**gekennzeichnet durch**
das zusätzliche Erfassen eines Lambda-Wertes (λ) des Abgases als Betriebsgröße, wobei beim Detektieren eines erhöhten Lambda-Werts (λ) gegenüber dem Normalbetrieb eine erhöhte Wahrscheinlichkeit für das Überschreiten des vorbestimmten Maximalwerts **durch** den Brennraumspitzendruck angenommen wird.

6. Verfahren nach einem der vorstehenden Ansprüche,
**gekennzeichnet durch**
das zusätzliche Erfassen einer Stegtemperatur (T_{steg}) im Brennraum als Betriebsgröße, wobei beim Detektieren einer erhöhten Stegtemperatur (T_{steg}) gegenüber dem Normalbetrieb eine erhöhte Wahrscheinlichkeit für das Überschreiten des vorbestimmten Maximalwerts **durch** den Brennraumspitzendruck angenommen wird.

7. Verfahren nach einem der vorstehenden Ansprüche,
**gekennzeichnet durch**
das zusätzliche Erfassen einer Abgastemperatur (T_{Abg}), eines Lambda-Werts (λ) des Abgases, einer Winkelgeschwindigkeit einer Kurbelwelle des Verbrennungsmotors und/oder einer Stegtemperatur (T_{steg}) im Brennraum als Betriebsgrößen, wobei beim Vorliegen vorbestimmter Wertekombinationen dieser Betriebsgrößen eine erhöhte Wahrscheinlichkeit für das Überschreiten des vorbestimmten Maximalwerts **durch** den Brennraumspitzendruck angenommen wird.

8. Verfahren nach einem der vorstehenden Ansprüche,
**gekennzeichnet durch**
das zusätzliche Erfassen einer Abgastemperatur (T_{Abg}), eines Lambda-Werts (λ) des Abgases und einer Winkelgeschwindigkeit (ω) einer Kurbelwelle des Verbrennungsmotors als Betriebsgrößen, wobei beim Detektieren einer erhöhten Abgastemperatur (T_{Abg}) und eines verringerten Lambda-Werts (λ) gegenüber dem Normalbetrieb in Verbindung mit einer Beschleunigung der Kurbelwelle im Verbrennungstakt gegenüber dem Normalbetrieb eine erhöhte Wahrscheinlichkeit für das Überschreiten des vorbestimmten Maximalwerts **durch** den Brennraumspitzendruck angenommen wird.

9. Verfahren nach einem der vorstehenden Ansprüche,
**gekennzeichnet durch**
das zusätzliche Erfassen einer Abgastemperatur (T_{Abg}), eines Lambda-Werts (λ) des Abgases und einer Winkelgeschwindigkeit (ω) einer Kurbelwelle des Verbrennungsmotors als Betriebsgrößen, wobei beim Detektieren einer verringerten Abgastemperatur (T_{Abg}) und eines erhöhten Lambda-Werts (λ) gegenüber dem Normalbetrieb in Verbindung mit einer Verzögerung der Kurbelwelle im Verbrennungstakt gegenüber dem Normalbetrieb keine erhöhte Wahrscheinlichkeit für das Überschreiten des vorbestimmten Maximalwerts durch den Brennraumspitzendruck angenommen wird.

## Claims

1. Method for operating an internal combustion engine, in particular a diesel engine, having the steps of acquiring operating variables of the internal combustion engine and of adjusting operating parameters of the internal combustion engine as a function of the acquired operating variables, and the step of checking whether the values of the acquired operating variables and/or combinations of these values indicate a deviation of a combustion chamber peak pressure from a predetermined maximum value, **characterized by** the acquisition of an angular speed (ω) of a crankshaft of the internal combustion engine as an operating variable, wherein, when a deceleration of the crankshaft is detected in the compression stroke compared to a normal operating mode, an increased probability of the predetermined maximum value being exceeded by the combustion chamber peak pressure is assumed and/or when an acceleration of the crankshaft is detected in the combustion stroke compared to a normal operating mode an increased probability of the predetermined maximum value being exceeded by the combustion engine peak pressure is assumed.

2. Method according to Claim 1, **characterized in that** the adjustment of the operating parameters of the internal combustion engine occurs in order to approximate the combustion chamber peak pressure to the predetermined maximum value.

3. Method according to Claim 1 or 2, **characterized in that** second cylinders whose working phases are superimposed on the compression stroke of a first cylinder are switched off during the compression stroke of the first cylinder.

4. Method according to Claim 1 or 2, **characterized by** the additional acquisition of an exhaust gas temperature (T_{Abg}) as an operating variable, wherein, when a reduced exhaust gas temperature is detected compared to the normal operating mode, an increased probability of the predetermined maximum value being exceeded by the combustion chamber peak pressure is assumed.

5. Method according to one of the preceding claims, **characterized by** the additional acquisition of a lambda value (λ) of the exhaust gas as an operating variable, wherein, when an increased lambda value (λ) is detected compared to the normal operating mode, an increased probability of the predetermined maximum value being exceeded by the combustion chamber peak pressure is assumed.

6. Method according to one of the preceding claims, **characterized by** the additional acquisition of a web temperature (T_{steg}) in the combustion chamber as an operating variable, wherein, when an increased web temperature (T_{steg}) is detected compared to the normal operating mode, an increased probability of the predetermined maximum value being exceeded by the combustion chamber peak pressure is assumed.

7. Method according to one of the preceding claims, **characterized by** the additional acquisition of an exhaust gas temperature (T_{Abg}), of a lambda value (λ) of the exhaust gas, of an angular speed of a crankshaft of the internal combustion engine and/or of a web temperature (T_{steg}) in the combustion chamber as operating variables, wherein, when predetermined value combinations of these operating variables are present, an increased probability of the predetermined maximum value being exceeded by the combustion chamber peak pressure is assumed.

8. Method according to one of the preceding claims, **characterized by** the additional acquisition of an exhaust gas temperature (T_{Abg}), of a lambda value (λ) of the exhaust gas and of an angular speed (ω) of a crankshaft of the internal combustion engine as operating variables, wherein, when an increased exhaust gas temperature (T_{Abg}) and a reduced lambda value (λ) are detected compared to the normal operating mode in conjunction with an acceleration of the crankshaft in the combustion stroke compared to the normal operating mode, an increased probability of the predetermined maximum value being exceeded by the combustion chamber peak pressure is assumed.

9. Method according to one of the preceding claims, **characterized by** the additional acquisition of an exhaust gas temperature (T_{Abg}), of a lambda value (λ) of the exhaust gas and of an angular speed (ω) of a crankshaft of the internal combustion engine as operating variables, wherein, when a reduced exhaust gas temperature (T_{Abg}) and an increased lambda value (λ) are detected compared to the normal operating mode in conjunction with a deceleration in the crankshaft in the combustion stroke compared to the normal operating mode, an increased probability of the predetermined maximum value being exceeded by the combustion chamber peak pressure is not assumed.

## Revendications

1. Procédé pour le fonctionnement d'un moteur à combustion interne, en particulier d'un moteur diesel, comprenant les étapes de la saisie de grandeurs de service du moteur à combustion interne ainsi que du réglage des paramètres de service du moteur à combustion interne en fonction des grandeurs de service saisies et l'étape du contrôle destiné à savoir si les valeurs des grandeurs de service et/ou des combinaisons saisies de ces valeurs indiquent un écart entre une pression maximale de la chambre de combustion et une valeur maximale prédéfinie,
**caractérisé par**
la saisie d'une vitesse d'angle (ω) d'un vilebrequin du moteur à combustion interne comme grandeur de service, une probabilité élevée de dépassement de la valeur maximale prédéfinie par la pression maximale de la chambre de combustion étant admise en cas de détection d'une temporisation du vilebrequin dans le cycle de compression par rapport à un fonctionnement normal et/ou une probabilité élevée de dépassement de la valeur maximale prédéfinie par la pression maximale de la chambre de combustion étant admise en cas de détection d'une accélération du vilebrequin dans le cycle de combustion par rapport à un fonctionnement normal.

2. Procédé selon la revendication 1,
**caractérisé en ce que** le réglage des paramètres de service du moteur à combustion interne s'effectue par rapport à un ajustement de la pression maximale de la chambre de combustion sur la valeur maximale prédéfinie.

3. Procédé selon la revendication 1 ou 2,
**caractérisé en ce que** des seconds cylindres, dont les phases de travail sont superposées au cycle de compression du premier cylindre, sont déconnectés pendant le cycle de compression.

4. Procédé selon la revendication 1 ou 2,
**caractérisé par**
la saisie supplémentaire d'une température d'échappement (T_{Abg}) comme grandeur de service, une probabilité élevée de dépassement de la valeur maximale prédéfinie par la pression maximale de la chambre de combustion étant admise en cas de détection d'une température d'échappement réduite par rapport au fonctionnement normal.

5. Procédé selon l'une quelconque des revendications précédentes,
**caractérisé par**
la saisie supplémentaire d'une valeur lambda (λ) des gaz d'échappement comme grandeur de service, une probabilité élevée de dépassement de la valeur maximale prédéfinie par la pression maximale de la chambre de combustion étant admise en cas de détection d'une valeur lambda (λ) élevée par rapport au fonctionnement normal.

6. Procédé selon l'une quelconque des revendications précédentes,
**caractérisé par**
la saisie supplémentaire d'une température de traverse (T_{steg}) dans la chambre de combustion comme grandeur de service, une probabilité élevée de dépassement de la valeur maximale prédéfinie par la pression maximale de la chambre de combustion étant admise en cas de détection d'une température de traverse (T_{steg}) élevée par rapport au fonctionnement normal.

7. Procédé selon l'une quelconque des revendications précédentes,
**caractérisé par**
la saisie supplémentaire d'une température d'échappement (T_{Abg}), d'une valeur lambda (λ) des gaz d'échappement, d'une vitesse angulaire d'un vilebrequin du moteur à combustion interne et/ou d'une température de traverse (T_{steg}) dans la chambre à combustion comme grandeurs de service, une probabilité élevée de dépassement de la valeur maximale prédéfinie par la pression maximale dans la chambre de combustion étant admise en cas de présence de combinaisons de valeurs prédéfinies de ces grandeurs de service.

8. Procédé selon l'une quelconque des revendications précédentes,
**caractérisé par**
la saisie supplémentaire d'une température d'échappement (T_{Abg}), d'une valeur lambda (λ) des gaz d'échappement et d'une vitesse angulaire (ω) d'un vilebrequin du moteur à combustion interne comme grandeurs de service, une probabilité élevée de dépassement de la valeur maximale prédéfinie par la pression maximale dans la chambre de combustion étant admise en cas de détection d'une température d'échappement (T_{Abg}) élevée et d'une valeur lambda (λ) réduite par rapport au fonctionnement normal en liaison avec une accélération du vilebrequin pendant le cycle de combustion par rapport au fonctionnement normal.

9. Procédé selon l'une quelconque des revendications précédentes,
**caractérisé par**
la saisie supplémentaire d'une température d'échappement (T_{Abg}), d'une valeur lambda (λ) des gaz d'échappement et d'une vitesse angulaire (ω) d'un vilebrequin du moteur à combustion interne comme grandeurs de service, aucune probabilité élevée de dépassement de la valeur maximale prédéfinie par la pression maximale dans la chambre de combustion n'étant admise en cas de détection d'une température d'échappement (T_{Abg}) réduite et d'une valeur lambda (λ) élevée par rapport au fonctionnement normal en liaison avec une temporisation du vilebrequin dans le cycle de combustion par rapport au fonctionnement normal.
